(19) Europäisches Patentamt
European Patent Office
Office européen des brevets

(11) Veröffentlichungsnummer: **0 265 842 A2**

# (12) EUROPÄISCHE PATENTANMELDUNG

(21) Anmeldenummer: **87115485.2**

(22) Anmeldetag: **22.10.87**

(51) Int. Cl.⁴: **C08G 65/40**, C08L 81/06

(30) Priorität: **28.10.86 DE 3636558**

(43) Veröffentlichungstag der Anmeldung: **04.05.88 Patentblatt 88/18**

(84) Benannte Vertragsstaaten: **BE DE FR GB NL**

(71) Anmelder: **BASF Aktiengesellschaft**
**Carl-Bosch-Strasse 38**
**D-6700 Ludwigshafen(DE)**

(72) Erfinder: **Ittemann, Peter, Dr.**
**Wilhelm-Busch-Strasse 87**
**D-6700 Ludwigshafen(DE)**
Erfinder: **Heinz, Gerhard, Dr.**
**Im Vogelsang 2**
**D-6719 Weisenheim(DE)**

## (54) Hochtemperaturbeständige Polyethersulfon/Polyetherketon-Blockcopolykondensate.

(57) Hochtemperaturbeständige Blockcopolykondensate, enthaltend 50 bis 98 mol-% Polyethersulfonblöcke mit einem Molekulargewicht $\overline{M}_w$ im Bereich von 1500 bis 30.000 und 2 bis 50 mol-% Polyetherketonblöcken, wobei zur Verbesserung der Wärmebeständigkeit Blockeinheiten, die sich von Biphenylverbindungen als Monomeren ableiten, enthalten sind.

EP 0 265 842 A2

Xerox Copy Centre

## Hochtemperaturbeständige Polyethersulfon/Polyetherketon-Blockcopolykondensate

Die Erfindung betrifft hochtemperaturbeständige Blockcopolykondensate, enthaltend

A) 50 bis 98 mol-% Polyethersulfonblöcke mit einem Molekulargewicht $\overline{M}_n$ im Bereich von 1500 bis 30.000, aufgebaut aus

$A_1$) 0 bis 100 mol-% Einheiten der allgemeinen Formel I

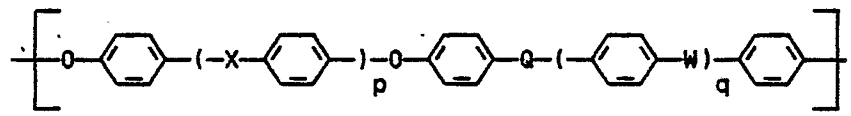

(I)

und/oder

$A_2$) 0 bis 100 mol-% Einheiten der allgemeinen Formel

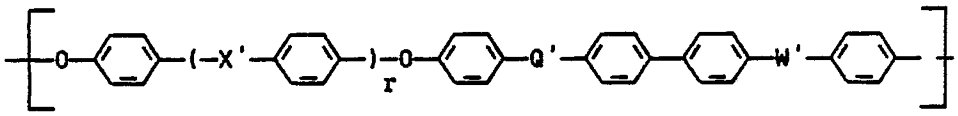

(II)

oder deren kernsubstituierten $C_1$-$C_6$-Alkyl-oder Alkoxy, Aryl-, Chlor-oder Fluorderivaten, wobei X, X', Q, Q', W und W' unabhängig voneinander

-$SO_2$-, -O-, eine chem. Bindung oder -CRR'-sein können und jeweils mindestens einer der Substituenten X, Q, W und X', Q', W', -$SO_2$-ist,

R und R' jeweils Wasserstoffatome, $C_1$-$C_6$-Alkyl-oder Alkoxygruppen, Arylgruppen oder deren Fluor-oder Chlorderivate darstellen, und

p, q und r jeweils den Wert 0 oder 1 haben, und

B) 2 bis 50 mol-% Polyetherketonblöcken, aufgebaut aus

$B_1$) 0 bis 100 mol-% Einheiten der allgemeinen Formel III

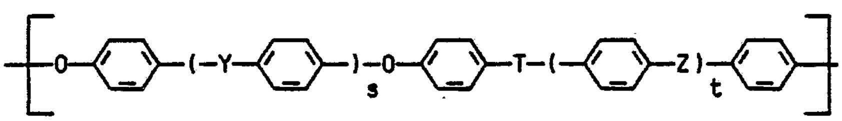

(III)

und

$B_2$) 0 bis 100 mol-% Einheiten der allgemeinen Formel

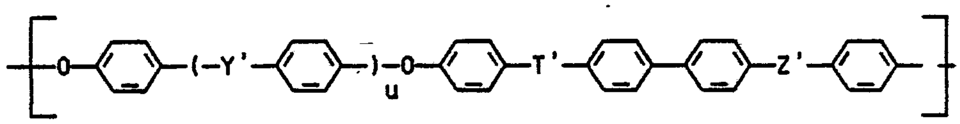

(IV)

oder deren kernsubstituierten $C_1$-$C_6$-Alkyl-, $C_1$-$C_6$-Alkoxy-, Phenyl-, Chlor-oder Fluorderivaten, wobei

Y, Y', T, T', Z und Z' jeweils -CO-, CR"R"', eine chem. Bindung oder -O-sein können und mindestens einer der Substituenten Y, T und Z bzw. Y', T' und Z' -CO-ist

R" und R"' die gleiche Bedeutung wie R und R' haben können,

und s, t und u jeweils den Wert 0 oder 1 haben,

mit der Maßgabe, daß mindestens eine der Einheiten $A_2$ oder $B_2$ vorhanden ist.

Außerdem betrifft die Erfindung ein Verfahren zur Herstellung derartiger Blockcopolykondensate, deren Verwendung zur Herstellung von Formkörpern und Formkörper, die die erfindungsgemäßen Blockcopolykondensate als wesentliche Komponenten enthalten.

Statistische Ethersulfon/Etherketon-Copolymerisate sind an sich bekannt und in der Literatur beschrieben. In der EP-A-1879 und der EP-A-30 033 werden Polymere mit wiederkehrenden Einheiten

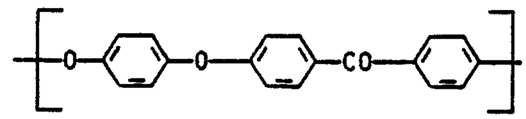 und

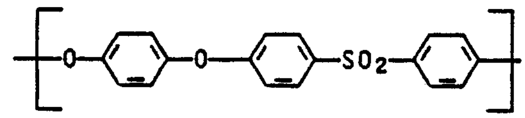 .

beschrieben, die durch gleichzeitige Umsetzung von Hydrochinon, 4,4'-Dichlorbenzophenon und 4,4'-Dichlordiphenylsulfon erhältlich sind. Diese weisen in jedem Fall Anteile von mehr als 50 mol-% an Polyetherketon-Einheiten (PEEK) auf und sind daher kristallin. Die durch den hohen PEEK-Gehalt bedingte Kristallinität hat auch zur Folge, daß die Copolymere nicht mehr transparent sind. Dies gilt auch für das in der EP 30 033 in Beispiel 6 beschriebene Blockcopolymere aus Polyetherketon-und Polyethersulfonblöcken mit einem Polyetherketonanteil von etwa 80 mol-%.

Der vorliegenden Erfindung lag die Aufgabe zugrunde, Copolymere mit Etherketon-und Ethersulfongruppen in der Hauptkette zur Verfügung zu stellen, die die vorstehend geschilderten Nachteile nicht zeigen und gleichzeitig auch eine gute Wärmeformbeständigkeit aufweisen.

Erfindungsgemäß wird diese Aufgabe gelöst durch die eingangs definierten hochtemperaturbeständigen Blockcopolykondensate.

Als Komponente A enthalten die erfindungsgemäßen Blockcopolykondensate 50 bis 98, vorzugsweise 60 bis 97 und insbesondere 70 bis 95 mol-%, bezogen auf die Summe A + B, Polyethersulfonblöcke der allgemeinen Formel I und/oder II.

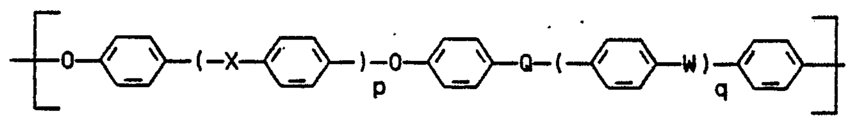 (I)

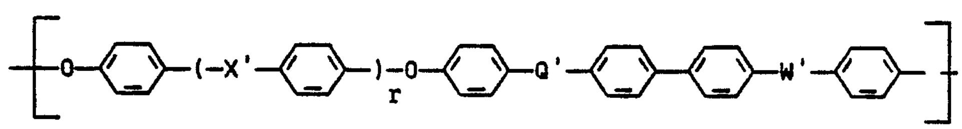 (II)

oder deren kernsubstituierten $C_1$-$C_6$-Alkyl-oder Alkoxy-, Aryl-, Chlor-oder Fluorderivaten.

Die Substituenten X, X', Q, Q', W und W' können jeweils $-SO_2-$, -O-, eine chem. Bindung oder CRR' sein, in jedem Falle ist jeweils mindestens einer der Substituenten X, Q oder W eine $-SO_2$-Gruppe.

Entsprechendes gilt für die Substituenten X', Q' und W', d.h. auch von diesen ist mindestens einer eine $SO_2$-Gruppe.

R und R' im Substituenten -CRR'-stellen Wasserstoffatome,

$C_1$-$C_6$-Alkyl-oder $C_1$-$C_6$-Alkoxygruppen, Arylgruppen oder deren Chlor-oder Fluorderivate dar. Beispiele sind Methyl-, Ethyl-, i-und n-Propyl, entsprechende Alkoxygruppen und $CF_3$. Bevorzugte Substituenten sind Wasserstoff, Methyl, Phenyl und Trifluormethyl.

Die Parameter p, q und r können jeweils den Wert 0 oder 1 haben.

Innerhalb der Blöcke A können die Einheiten der Formeln I und II statistisch oder ebenfalls in Blockform vorliegen, d.h. die Blöcke A können ihrerseits wiederum aus Blöcken mit wiederkehrenden Einheiten I und II aufgebaut sein.

Das Molekulargewicht $\overline{M}_n$ (Zahlenmittelwert) der Blöcke A liegt im Bereich von 1500 bis 30.000, vorzugsweise von 2000 bis 25.000 und insbesondere von 3000 bis 22.000.

Der Anteil der Einheiten I und/oder II unterliegt keiner Beschränkung, d.h. er kann jeweils von 0 bis 100 Mol.% betragen. In letzterem Fall bauen sich die Blöcke A aus nur einer wiederkehrenden Einheit auf. Bevorzugt sind die Blöcke A aus 5 bis 95, insbesondere 15 bis 85 mol-% Einheiten der Formel I und 5 bis 95, insbesondere 15 bis 85 mol-% Einheiten der Formel II aufgebaut. Beispiele für Einheiten der allgemeinen Formel I und II sind:

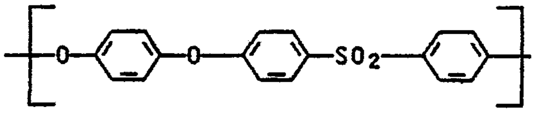

(I1)

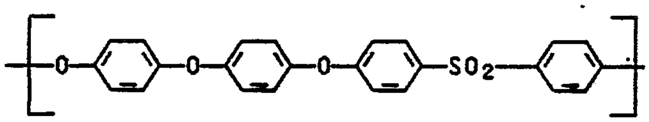

(I2)

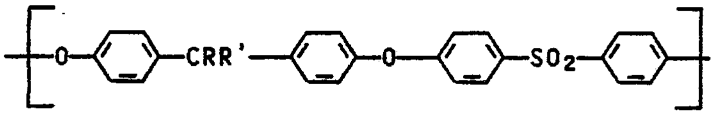

(I3)

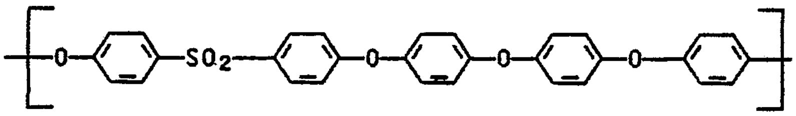

(I4)

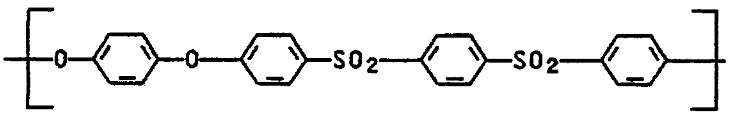

(I5)

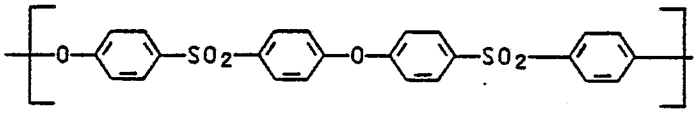

(I6)

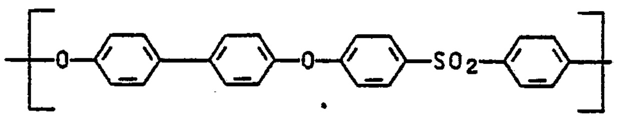

(I7)

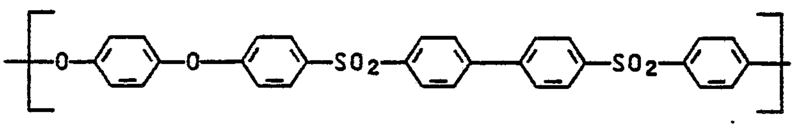

(II1)

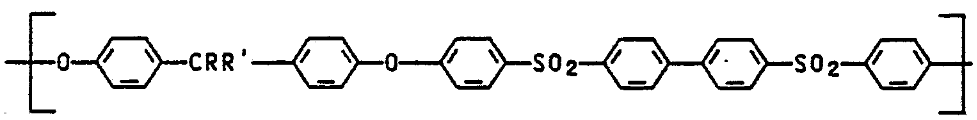

(II2)

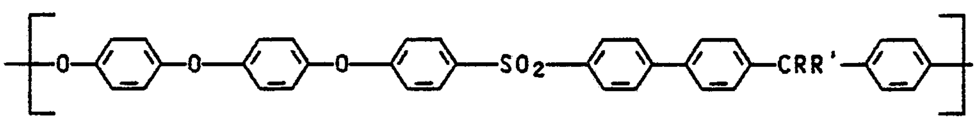

(II3)

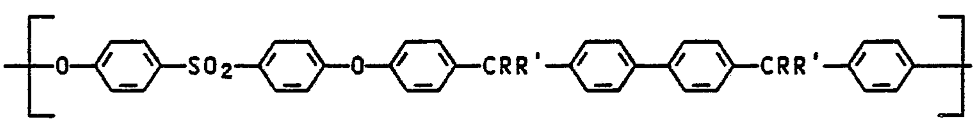

(II4)

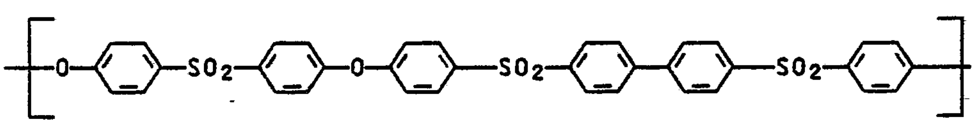

(II5)

wobei diese Auswahl nur stellvertretend für die unter die allgemeinen Formeln I und II fallenden Einheiten steht. Über die Substituenten X, Q, W bzw. X', Q' und W' und die Parameter p, q und r lassen sich die

vorstehenden Beispiele wie folgt beschreiben:

| | p | q | X | Q | W |
|---|---|---|---|---|---|
| I1 | 0 | 0 | - | $-SO_2-$ | - |
| I2 | 1 | 0 | -O- | $-SO_2-$ | - |
| I3 | 1 | 0 | -CRR'- | $-SO_2-$ | - |
| I4 | 1 | 1 | $-SO_2-$ | -O- | -O- |
| I5 | 0 | 1 | - | $-SO_2-$ | $-SO_2-$ |
| I6 | 1 | 0 | $-SO_2-$ | $-SO_2-$ | - |
| I7 | 1 | 0 | chem. Bdg. | $-SO_2-$ | - |

| | r | X' | Q' | W' |
|---|---|---|---|---|
| II1 | 0 | - | $-SO_2-$ | $-SO_2-$ |
| II2 | 1 | -CRR'- | $-SO_2-$ | $-SO_2-$ |
| II3 | 1 | -O- | $-SO_2-$ | -CRR'- |
| II4 | 1 | $-SO_2-$ | -CRR'- | -CRR'- |
| II5 | 1 | $-SO_2-$ | $-SO_2-$ | $-SO_2-$ |

Obwohl, wie bereits erwähnt, grundsätzlich beliebige Kombinationen der Substituenten X, Q und W bzw. X', Q' und W' möglich sind, werden im allgemeinen solche Einheiten bevorzugt, in denen Q und W bzw. Q' und W' gleich sind, da die entsprechenden Monomeren in der Regel leichter zugänglich sind.

Die als Komponente B in den erfindungsgemäßen Blockcopolykondensaten erhaltenen. Polyetherketonblöcke der allgemeinen Formeln III und/oder IV machen 2 bis 50, vorzugsweise 3 bis 40 und insbesondere 5 bis 30 mol-%, bezogen auf die Summe der Komponenten A und B, aus.

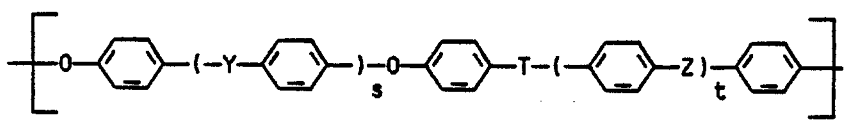
(III)

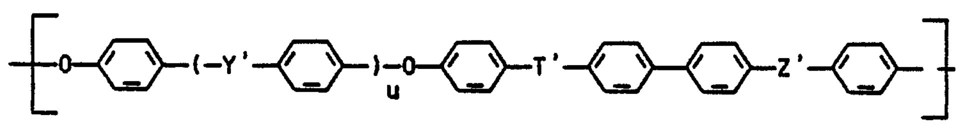
(IV)

Wie bei der Komponente A können die Einheiten der Formel III und/oder IV auch mit $C_1$-$C_6$-Alkyl-, $C_1$-$C_6$-Alkoxy-, Phenyl-, Chlor-oder Fluor am aromatischen Kern substituiert sein.

Die Substituenten Y, Y', T, T', Z und Z' können jeweils -CO-, CR''R'''-, eine chem. Bindung oder -O-sein, mit der Maßgabe, daß mindestens einer der Substituenten Y, T, Z bzw. Y', T' und Z' eine -CO-Gruppe ist.

s, t und n haben jeweils den Wert 0 oder 1.

Die Blöcke B können nur aus Einheiten je einer der Formeln III und IV oder aus Einheiten der beiden Formeln aufgebaut sein; in letzterem Fall können die Einheiten $B_1$ und $B_2$ entweder statistisch oder in Form von Blöcken angeordnet sein. Der Anteil der Einheiten $B_1$ und $B_2$ an den Blöcken B unterliegt keiner Beschränkung und kann jeweils von 0 bis 100 mol-% betragen. Bevorzugt werden Blöcke aus 5 bis 95, insbesondere 15 bis 85 mol-% $B_1$ und entsprechend 5 bis 95, insbesondere 15 bis 85 mol-% $B_2$.

Das Molekulargewicht (Zahlenmittelwert) der Blöcke B liegt im allgemeinen im Bereich von 500 bis 15.000, vorzugsweise 1500 bis 10.000.

Beispiele für Einheiten der Formeln III und IV sind solche, in denen in den oben angegebenen Beispielen für die Einheiten I und II die $-SO_2$-Gruppen jeweils durch -CO-ersetzt sind.

Diese Einheiten lassen sich mit den Parametern T, T', Y, Y', Z, Z', s, t und n analog wie die Beispiele der Einheiten I und II beschrieben, indem $-SO_2-$jeweils durch -CO-ersetzt wird.

Als Beispiele für Dihydroxy-und Dihalogenverbindungen, die zur Herstellung der Blöcke I bis IV in den erfindungsgemäßen Blockcopolykondensaten eingesetzt werden können, seien stellvertretend genannt:

Dihyroxyverbindungen

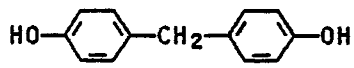

Di-(4-hydroxyphenyl)methan

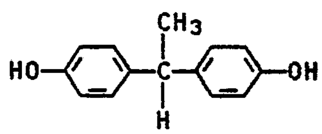

2,2-Di(4-hydroxyphenyl)ethan

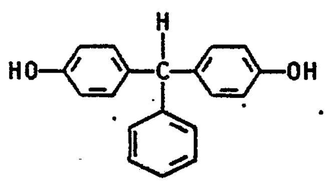

1-Phenyl-1,1-di-(4-hydroxyphenyl)-methan

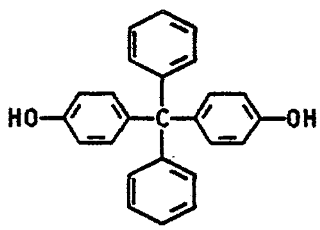

Diphenyl-di-(4-hydroxyphenyl)methan

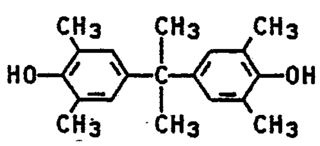

Tetramethylbisphenol A

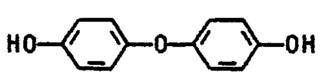

4,4'-Dihydroxydiphenylether

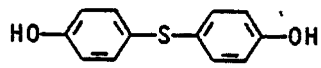

4,4'-Dihydroxydiphenylsulfan

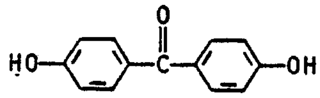

4,4'-Dihydroxybenzophenon

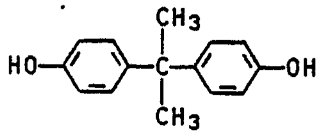

Bisphenol A

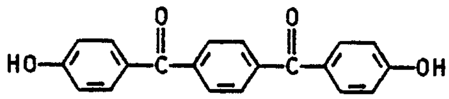

1,4-Di(4-hydroxybenzoyl)benzol

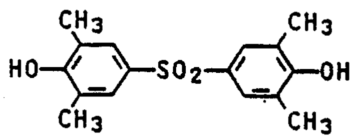

Tetramethylbisphenol S

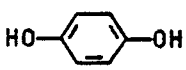

Hydrochinon

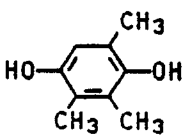

2,3,6-Trimethylhydrochinon

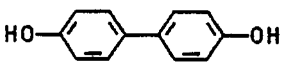

Dihydroxydiphenyl

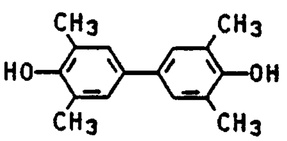

3,3',5,5'-Tetramethyldihydroxydiphenyl

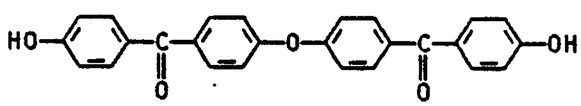

Dihydroxybenzophenonether

Von den vorstehend aufgeführten Dihydroxyverbindungen werden 4,4'-Dihydroxydiphenyl, 3,3',5,5'-Tetramethyl-4,4'-dihydroxydiphenyl, Bisphenol A, Tetramethyl-Bisphenol A, Bisphenol S und 2,3,6-Trimethylhydrochinon besonders bevorzugt.

Dihalogenverbindungen

Bezeichnung der Chlorverbindung

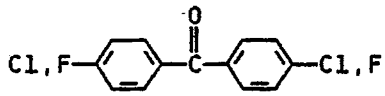

4,4'-Dichlorbenzophenon

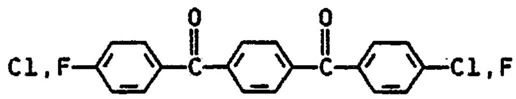

1,4-Di(4-chlorbenzoyl)benzol

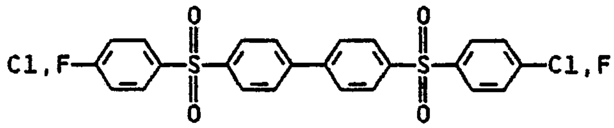

4,4'-Di-(4-chlorphenylsulfonyl)-diphenyl

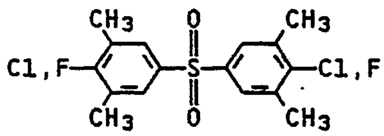

3,3',5,5'-Tetramethyl-4,4'-dichlordiphenylsulfon

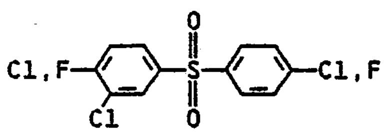

3'-Chlor-4,4'-Dichlordiphenylsulfon

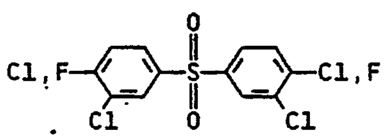

3,3',4,4'-Tetrachlordiphenylsulfon

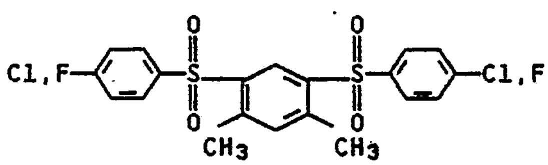

1,5-Dimethyl-2,4-di(4'-chlorphenylsulfonyl)benzol

Von den vorstehend aufgeführten Dihalogenverbindungen werden 3,3',5,5'-Tetramethyl-4,4'-dichlordiphenylsulfon, 4,4-Di(4-chlorphenylsulfonyl)diphenyl und 1,5-Dimethyl-2,4-di-(4'-chlorphenylsulfonyl)benzol besonders bevorzugt bzw. die entsprechenden Verbindungen, in denen die -$SO_2$-Gruppe durch die -CO-Gruppe ersetzt ist.

Als Monomere mit Biphenyleinheiten, die zur Herstellung der Blöcke II und IV eingesetzt werden, seien nur stellvertretend genannt:

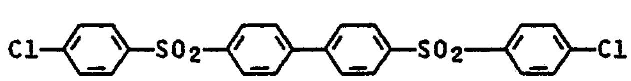

4,4'-Di(4-chlorphenylsulfonyl)biphenyl

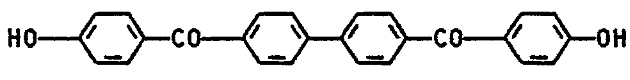

4,4'-Di(4-hydroxybenzoyl)-biphenyl

sowie grundsätzlich Verbindungen analoger Struktur in denen die -$SO_2$-oder -CO-Gruppen durch andere Grupen (O-, CRR'-) ersetzt sind.

Die vorstehend genannten Verbindungen können, solange die Voraussetzungen des Anspruchs 1 erfüllt sind, prinzipiell in beliebiger Kombination miteinander umgesetzt werden.

Das Molekulargewicht $\overline{M}_n$ der Blöcke $A_1$ und $A_2$ liegt im Bereich von 1500 bis 30.000, insbesondere von 2000 bis 20.000, besonders bevorzugt im Bereich von 2000 bis 15.000, das der Blöcke $B_1$ und $B_2$ im Bereich von 500 bis 15.000, vorzugsweise von 1500 bis 10.000.

In jedem Fall ist es für die Erzielung der vorteilhaften Eigenschaften der Blockcopolykondensate wesentlich, daß mindestens einer der Blöcke der allgemeinen Formeln II oder IV vorhanden ist.

Das Gesamtmolekulargewicht der Blockcopolykondensate liegt im Bereich von 15 000 - 200 000, vorzugsweise von 15 000 - 100 000 und insbesondere im Bereich von 20 000 - 50 000.

Alle vorstehend genannten Molekulargewichtswerte sind Zahlenmittelwerte, wie sie z.B. in E. Vollmert, Grundriß der Makromolekularen Chemie, Bd. 3, S. 122 ff (1979) definiert sind.

Die Copolykondensate können mit anderen Thermoplasten, beispielsweise Polyestern, Polyamiden, Polyurethanen, Polyolefinen, Polyvinylchlorid und Polyoxymethylenen in Mengen von 5 bis 60 Gew.-%, vorzugsweise von 20 bis 50 Gew.-%, bezogen auf die Formmassen, gemischt werden.

Sie können außerdem mit verstärkend wirkenden Füllstoffen, gegebenenfalls transparenten Pigmenten und anderen Hilfs-und Zusatzstoffen modifiziert werden.

Als verstärkend wirkende Füllstoffe seien beispielsweise Asbest, Kohle und vorzugsweise Glasfasern genannt, wobei die Glasfasern z.B. in Form von Glasgeweben, -matten, -vliesen und/oder vorzugsweise Glasseidenrovings oder geschnittener Glasseide aus alkaliarmen E-Glasen mit einem Durchmesser von 5 bis 20 µm, vorzugsweise 8 bis 15 µm, zur Anwendung gelangen, die nach ihrer Einarbeitung eine mittlere Länge von 0,05 bis 1 mm, vorzugsweise 0,1 bis 0,5 mm, aufweisen. Die mit Glasseidenrovings oder geschnittener Glasseide verstärkten Formmassen enthalten zwischen 10 und 60 Gew.-%, vorzugsweise 20 bis 50 Gew.-%, des Verstärkungsmittels, bezogen auf das Gesamtgewicht, während die imprägnierten Glasgewebe, -matten und/oder -vliese zwischen 10 und 80 Gew.-%, vorzugsweise zwischen 30 und 60 Gew.-%, Copolykondensate, bezogen auf das Gesamtgewicht, enthalten. Als Pigmente eignen sich beispielsweise Titandioxid, Cadmiumoxid, Zinksulfid, Bariumsulfat und Ruß. Als andere Zusatz-und Hilfsstoffe kommen beispielsweise in Betracht Farbstoffe, Schmiermittel, wie z.B. Graphit, Polytetrafluorethylen oder Molybdändisulfid, Schleifmittel, wie z.B. Carborund, Lichtstabilisatoren und Hydrolyseschutzmittel. Auch Wollastonit, Calciumcarbonat, Glaskugeln, Quarzmehl und Bornitrid oder Mischungen dieser Füllstoffe sind verwendbar. Die Pigmente, Zusatz-und Hilfsstoffe werden üblicherweise in Mengen von 0,01 bis 3 Gew.-%, bezogen auf das Gewicht an Copolykondensat, eingesetzt.

Die erfindungsgemäßen Formmassen können nach an sich bekannten Verfahren zur Herstellung von Blockcopolymeren hergestellt werden, wie sie in der Literatur beschrieben sind. Grundsätzlich können die Blöcke I bis IV getrennt hergestellt und anschließend miteinander verknüpft werden oder aber die Blockcopolykondensate werden durch entsprechende aufeinanderfolgende getrennte Zugabe der Dihydroxyverbindungen in einem Zuge synthetisiert.

Die Verfahrensbedingungen wie Temperatur, Druck, geeignete Lösungsmittel und evtl. Zusätze (Katalysatoren) sind die gleichen, wie sie für statistische Copolykondensate in der EP-A 113 112 und der EP-A 135 130 beschrieben sind, so daß sich hier nähere Angaben erübrigen.

Besonders geeignet ist die Umsetzung in aprotischen polaren Lösungsmitteln in Gegenwart von wasserfreien Alkalicarbonaten als Katalysatoren. Eine besonders bevorzugte Kombination ist N-Methylpyrrolidon als Lösungsmittel und $K_2CO_3$ als Katalysator.

Die Menge an N-Methylpyrrolidon beträgt im allgemeinen 5 bis 100 Mol, vorzugsweise 5 bis 20 Mol, bezogen auf ein Mol Monomere. Dies ergibt einen bevorzugten Feststoffgehalt der Reaktionslösung im Bereich von 5 bis 50 Gew.%, besonders bevorzugt 10 bis 40 Gew.%.

Das bei der Polykondensation entstehende Wasser kann mit Hilfe eines Azeotropbildners, Anlegen eines Unterdrucks oder vorzugsweise durch Einleiten eines Stickstoffstroms und Abdestillation entfernt werden.

Als Azeotropbildner eignen sich alle Verbindungen, die bei Normaldruck im Bereich der Reaktionstemperatur sieden und die sich mit dem Reaktionsgemisch homogen mischen lassen, ohne chemische Reaktionen einzugehen.

Die Reaktionstemperatur liegt im allgemeinen im Bereich von 130 bis 220°C, vorzugsweise 150 bis 210°C; die Gesamt-Reaktionsdauer richtet sich nach dem gewünschten Kondensationsgrad, liegt aber im allgemeinen im Bereich von 0,1 bis 15 Stunden in den einzelnen Stufen.

Bei niedrigem Anteil an Polyetherketonblöcken (2 bis 30 mol-%, abhängig von der Struktur der Monomeren) erhält man in der Regel amorphe Produkte, die jedoch hinsichtlich Lösungsmittelbeständigkeit und Beständigkeit gegen Spannungsrißkorrosion statistischen Copolymeren gleicher prozentualer Zusammensetzung weit überlegen sind.

Blockcopolykondensate mit höheren Gehalten an Polyetherketonblöcken können durch Tempern in teilkristalline Produkte überführt werden, die bei statistischen Copolymeren erst bei wesentlich höheren Etherketongehalten zu beobachten sind. Das hat eine Verbesserung der mechanischen Eigenschaften bei höheren Temperaturen zur Folge.

Im Anschluß an die Polykondensation können zur Stabilisierung freie Phenolat-Endgruppen mit einem Aryl-oder Alkylierungsmittel, wie z.B. Methylchlorid, umgesetzt werden. Dies erfolgt vorzugsweise bei Temperaturen von 50-200°C, vorzugsweise 50-150°C.

Das bei der Polykondensation mit $K_2CO_3$ anfallende suspendierte Alkalihalogenid kann mit einer geeigneten Trenneinrichtung, beispielsweise einem Klärfilter oder einer Zentrifuge abgetrennt werden.

Die Isolierung der Copolykondensate aus der Lösung kann durch Verdampfen des Lösungsmittels oder Ausfällung in einem geeigneten Nichtlösungsmittel erfolgen.

Die erfindungsgemäßen Formmassen zeichnen sich durch ihre ausgewogenen Eigenschaften aus. Bei einer hohen Wärmeformbeständigkeit und einer guten Spannungsrißbeständigkeit zeichnen sie sich durch eine geringe Wasseraufnahme aus und sind sehr gut verarbeitbar.

Die erfindungsgemäßen Formmassen können zur Herstellung von Formkörpern, Folien und Fasern verwendet werden. Insbesondere eignen sie sich wegen ihrer guten Eigenschaften zur Herstellung von Leiterplatten und elektrischen Steckverbindungen.

Die in den nachfolgenden Beispielen angegebene reduzierte Viskosität $\eta_{spec/c}$ wurde bei 25°C in 1 gew.%iger Lösung in 4-Chlorphenol/1,2-Dichlorbenzol (Gewichtsverhältnis 3:2) bestimmt.

Beispiel 1

114,9 g (0,4 Mol) 4,4'-Dichlordiphenylsulfon, 50,3 g (0,1 Mol) 4,4'-Di(4-chlorphenylsulfonyl)diphenyl, 117,6 g (0,52 Mol) 2,2-Di(4-hydroxyphenyl)propan und 78,3 g Kaliumcarbonat wurden mit 500 g N-Methylpyrrolidon versetzt. Das Reaktionsgemisch wurde unter ständigem Rühren auf 175°C erhitzt und das entstehende Reaktionswasser 4 Stunden bei dieser Temperatur durch einen starken Stickstoffstrom in einen Wasserabscheider übergetrieben. Anschließend wurde die Temperatur auf 185°C erhöht und 4 Stunden bei dieser Temperatur gerührt.

Nach dem Abkühlen des Reaktionsgemischs wurden 70,5 g (0,32 Mol) 4,4'-Difluorbenzophenon, 33,0 g (0,3 Mol) Hydrochinon, 45,6 g Kaliumcarbonat und 850 g N-Methylpyrrolidon hinzugegeben. Unter ständigem Durchleiten von Stickstoff wurde auf 150°C erhitzt und nach einer Stunde die Temperatur auf 185°C gesteigert. Das Reaktionsgemisch wurde 7 Stunden bei dieser Temperatur gehalten. Durch 30 minütiges Einleiten eines Methylchlorid-Stroms wurde die Polykondensation abgebrochen. Das Polymere wurde in Wasser/Methanol (Gewichtsverhältnis 1:1) ausgefällt und zur Entfernung der anorganischen Bestandteile mehrmals mit Wasser gewaschen und dann 12 Stunden bei 100°C im Vakuum getrocknet. Das Produkt besaß eine reduzierte Viskosität $\eta_{red}$ von 0,83 und eine durch DSC-Messungen bestimmte Glasübergangstemperatur von 186°C.

Beispiel 2

160,8 g (0,56 Mol) 4,4'-Dichlordiphenylsulfon, 120,8 g (0,24 Mol) 4,4'-Di(4-chlorphenylsulfonyl)diphenyl, 92,5 g (0,84 Mol) Hydrochinon und 127,7 g Kaliumcarbonat wurden mit 750 g N-Methylpyrrolidon versetzt. Das Reaktionsgemisch wurde unter ständigem Rühren auf 175°C erhitzt und das entstehende Reaktionswasser 4 Stunden bei dieser Temperatur durch einen Stickstoffstrom in einen Wasserabscheider übergetrieben. Anschließend wurde die Temperatur auf 185°C erhöht und 4 Stunden bei dieser Temperatur gerührt.

Nach dem Abkühlen des Reaktionsgemischs wurden 45,8 g (0,21 Mol) 4,4'-Difluorbenzophenon, 17,6 g (0,16 Mol) Hydrochinon, 24,3 g Kaliumcarbonat und 700 g N-Methylpyrrolidon zugegeben. Unter ständigem Durchleiten von Stickstoff wurde auf 150°C erhitzt und nach einer Stunde die Temperatur auf 185°C erhöht. Das Reaktionsgemisch wurde 7 Stunden bei dieser Temperatur gehalten. Durch 30 minütiges Einleiten eines Methylchlorid-Stroms wurde die Polykondensation abgebrochen, anschließend wurde das Polymere in Wasser ausgefällt und zur Entfernung der anorganischen Bestandteile mehrmals mit Wasser gewaschen und 12 Stunden bei 100°C im Vakuum getrocknet. Die reduzierte Viskosität betrug 0,67 und die durch DSC-Messungen bestimmte Glasübergangstemperatur 198°C.

Beispiel 3

71,8 g (0,25 Mol) 4,4'-Dichlordiphenylsulfon, 125,9 g (0,25 Mol) 4,4'-Di(4-chlorphenylsulfonyl)biphenyl, 131,4 g (0,53 Mol) 4,4'-Dihydroxydiphenylsulfon und 79,8 g Kaliumcarbonat wurden mit 700 g N-Methylpyrrolidon versetzt. Das Reaktionsgemisch wurde unter ständigem Rühren auf 175°C erhitzt und das entstehende Reaktionswasser 4 Stunden bei dieser Temperatur durch einen Stickstoffstrom in einen Wasserabscheider übergetrieben. Anschließend wurde die Temperatur auf 185°C erhöht und 4 Stunden bei dieser Temperatur gerührt.

Nach dem Abkühlen des Reaktionsgemischs wurden 43,3 g (0,2 Mol) 4,4'-Difluorbenzophenon, 18,4 g (0,17 Mol) Hydrochinon, 25,3 g Kaliumcarbonat und 850 g N-Methylpyrrolidon zugegeben. Unter ständigem Durchleiten von Stickstoff wurde auf 150°C erhitzt und nach einer Stunde die Temperatur auf 185°C erhöht. Das Reaktionsgemisch wurde 7 Stunden bei dieser Temperatur gehalten und anschließend wurde durch 30 minütiges Einleiten eines Methylchlorid-Stromes die Polykondensation abgebrochen. Das Polymere wurde in Wasser/Methanol (Gewichtsverhältnis 1:1) ausgefällt und zur Entfernung der anorganischen Bestandteile mehrmals mit Wasser gewaschen und dann 12 Stunden bei 100°C im Vakuum getrocknet. Es besaß eine reduzierte Viskosität $\eta_{red}$ von 0,92 und eine Glasübergangstemperatur (bestimmt durch DSC-Messung) von 223°C.

Beispiel 4

137,8 g (0,48 Mol) 4,4'-Dichlordiphenylsulfon, 57,5 g (0,252 Mol) 2,2'-Di(hydroxyphenyl)propan, 63,1 g (0,252 Mol) 4,4'-Dihydroxydiphenylsulfon und 76,6 g Kaliumcarbonat wurden mit 500 g N-Methylpyrrolidon versetzt. Das Reaktionsgemisch wurde unter ständigem Rühren auf 175°C erhitzt und das entstehende Reaktionswasser 4 Stunden bei dieser Temperatur durch einen Stickstoffstrom in einen Wasserabscheider übergetrieben. Anschließend wurde die Temperatur auf 180°C erhöht und 4 Stunden bei dieser Temperatur gerührt.

Nach dem Abkühlen des Reaktionsgemischs wurden 61,5 g (0,282 Mol) 4,4'-Difluorbenzophenon, 28,1 g (0,07 Mol) 4,4'-Di(4-fluorbenzoyl)diphenyl, 35,2 g (0,32 Mol) Hydrochinon, 48,6 g Kaliumcarbonat und 850 g N-Methylpyrrolidon zugegeben. Unter ständigem Durchleiten von Stickstoff wurde auf 150°C erhitzt und nach einer Stunde die Temperatur auf 185°C erhöht. Das Reaktionsgemisch wurde 7 Stunden bei dieser Temperatur gehalten und anschließend wurde durch 30 minütiges Einleiten eines Methylchlorid-Stroms die Polykondensation abgebrochen. Das Polymere wurde in Wasser/Methanol (Gewichtsverhältnis 1:1) ausgefällt und zur Entfernung der anorganischen Bestandteile mehrmals mit Wasser gewaschen und dann 12 Stunden bei 100°C im Vakuum getrocknet. Die reduzierte Viskosität $\eta_{red}$ betrug 0,64 und die durch DSC-Messungen bestimmte Glasübergangstemperatur lag bei 190°C.

Beispiel 5

155,1 g (0,54 Mol) 4,4'-Dihydroxydiphenylsulfon, 30,2 g (0,06 Mol) 4,4'-Di(4-chlorphenylsulfonyl)-diphenyl, 143,8 g (0,63 Mol) 2,2-Di(4-hydroxyphenyl)propan und 95,8 g Kaliumcarbonat wurden mit 700 g N-Methylpyrrolidon versetzt. Das Reaktionsgemisch wurde unter ständigem Rühren auf 175°C erhitzt und das entstehende Reaktionswasser 4 Stunden bei dieser Temperatur durch einen Stickstoffstrom in einen Wasserabscheider übergetrieben. Anschließend wurde die Temperatur auf 185°C erhöht und 4 Stunden bei dieser Temperatur gerührt.

Nach dem Abkühlen des Reaktionsgemischs wurden 24,1 g (0,11 Mol) 4,4'-Difluorbenzophenon, 18,8 g (0,047 Mol) 4,4'-Di(4-fluorbenzoyl)diphenyl, 13,2 g (0,12 Mol) Hydrochinon, 18,2 g Kaliumcarbonat und 650 ml N-Methylpyrrolidon zugegeben. Unter ständigem Durchleiten von Stickstoff wurde auf 150°C erhitzt und nach einer Stunde die Temperatur auf 185°C erhöht. Das Reaktionsgemisch wurde 7 Stunden bei dieser Temperatur gehalten. Durch 30 minütiges Einleiten eines Methylchlorid-Stroms wurde die Polykondensation abgebrochen, anschließend wurde das Polymere in Wasser/Methanol (Gewichtsverhältnis 1:1) ausgefällt und zur Entfernung der anorganischen Bestandteile mehrmals mit Wasser gewaschen und dann 12 Stunden bei 100°C im Vakuum getrocknet. Die reduzierte Viskosität $\eta_{red}$ betrug 0,70 und die durch DSC-Messungen bestimmte Glasübergangstemperatur lag bei 189°C.

Vergleichsbeispiel

34,46 g (0,12 mol) 4,4'-Dihydroxydiphenylsulfon, 14,09 g (0,127 mol) Hydrochinon und 21,23 g Kaliumcarbonat wurden in 200 ml Sulfolan und 160 ml Toluol 1 Stunde bei Raumtemperatur unter Durchleiten eines Stickstoffstromes gerührt. Unter Abdestillieren des Toluols wurde die Temperatur der Reaktionsmischung danach während 2 Stunden auf 180°C erhöht.

Nach Abkühlen auf Raumtemperatur wurden 104,74 g (0,48 mol) 4,4'-Difluor-benzophenon, 51,97 g (10,47 mol) Hydrochinon, 78,28 g Kaliumcarbonat, 200 ml Toluol und 360 ml Sulfolan zugegeben und 30 Minuten unter Durchleiten eines Stickstoffstromes bei Raumtemperatur gerührt. Danach wurde eine Stunde unter Rückfluß bei 140 bis 150°C erhitzt und dann die Temperatur der Reaktionsmischung durch Abdestillieren des Toluols auf 225°C gesteigert. Frisches Toluol wurde dabei tropfenweise zugegeben. Nach ca. 40 Minuten Reaktionszeit bei 225°C wurde Methylchlorid in die Reaktionsmischung eingeleitet, die nach 15 Minuten schlagartig so hochviskos wurde, daß sie nicht mehr gerührt werden konnte.

Nach dem Erkalten wurde der feste Kolbeninhalt fein zerkleinert und mit warmem Wasser 4 mal gewaschen. Beim letzten mal wurde das Waschwasser mit Oxalsäure auf einen pH-Wert von 2 eingestellt. Das erhaltene Polymere wurde 24 Stunden bei 200°C im Vakuum getrocknet. Es wies eine reduzierte Viskosität von $\eta_{red}$ = 1,05 dl/g und eine Glastemperatur von 163°C auf.

## Ansprüche

1. Hochtemperaturbeständige Blockcopolykondensate, enthaltend

A) 50 bis 98 mol-% Polyethersulfonblöcke mit einem Zahlenmittelwert des Molekulargewichts $\overline{M}_n$ im Bereich von 1500 bis 30.000, aufgebaut aus

$A_1$) 0 bis 100 mol-% Einheiten der allgemeinen Formel I

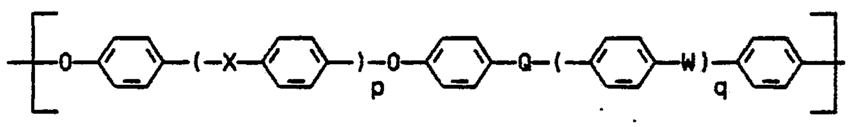

(I)

und/oder

$A_2$) 0 bis 100 mol-% Einheiten der allgemeinen Formel

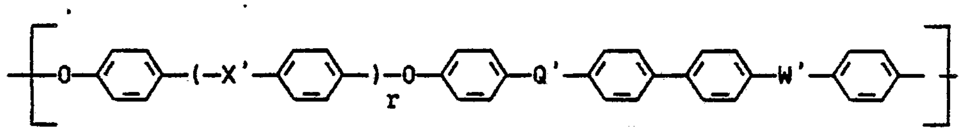

(II)

oder deren kernsubstituierten $C_1$-$C_6$-Alkyl-oder Alkoxy, Aryl-, Chlor-oder Fluorderivaten, wobei X, X', Q, Q' W und W' unabhängig voneinander

$-SO_2-$, -O-, eine chem. Bindung oder -CRR'-sein können und jeweils mindestens einer der Substituenten X, Q, W und X', Q', W', $-SO_2$-ist,

R und R' jeweils Wasserstoffatome, $C_1$-$C_6$-Alkyl-oder Alkoxygruppen, Arylgruppen oder deren Fluor-oder Chlorderivate darstellen, und

p, q und r jeweils den Wert 0 oder 1 haben, und

B) 2 bis 50 mol-% Polyetherketonblöcken, aufgebaut aus

$B_1$) 0 bis 100 mol-% Einheiten der allgemeinen Formel III

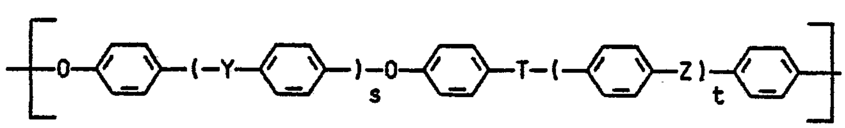

(III)

und/oder

$B_2$) 0 bis 100 mol-% Einheiten der allgemeinen Formel

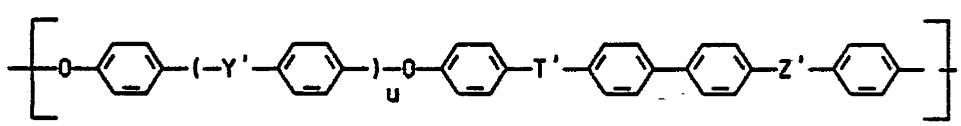

(IV)

oder deren kernsubstituierten $C_1$-$C_6$-Alkyl-, $C_1$-$C_6$-Alkoxy-, Phenyl-, Chlor-oder Fluorderivaten,
wobei
Y, Y', T, T', Z und Z' jeweils -CO-, CR"R"', eine chem. Bindung oder -O-sein können und mindestens einer der Substituenten Y, T und Z bzw. Y', T' und Z' -CO-ist R" und R"' die gleiche Bedeutung wie R und R' haben können,
und s, t und u jeweils den Wert 0 oder 1 haben,
mit der Maßgabe, daß mindestens eine der Einheiten $A_2$ oder $B_2$ vorhanden ist.

2. Hochtemperaturbeständige Blockcopolykondensate nach Anspruch 1, dadurch gekennzeichnet, daß die Polyethersulfonblöcke A) aufgebaut sind aus

$A_1$) 5 bis 95 mol-% Einheiten der Formel I und

$A_2$) 5 bis 95 mol-% Einheiten der Formel II.

3. Hochtemperaturbeständige Blockcopolykondensate nach den Ansprüchen 1 und 2, dadurch gekennzeichnet, daß die Polyetherketonblöcke B aufgebaut sind aus

$B_1$) 5 bis 95 mol-% Einheiten der Formel III und

$B_2$) 5 bis 95 mol-% Einheiten der Formel IV.

4. Verfahren zur Herstellung von hochtemperaturbeständigen Blockcopolykondensaten gemäß Anspruch 1 durch Polykondensation von aromatischen Dihalogenverbindungen und aromatischen Dihydroxyverbindungen in polaren aprotischen Lösungsmitteln in Gegenwart von Alkalimetallcarbonaten, dadurch gekennzeichnet, daß in einer ersten Stufe durch Umsetzung von Monomeren der allgemeinen Formeln Ia und Ib und ggf. IIa und IIb

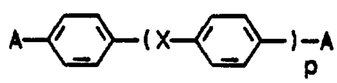 Ia

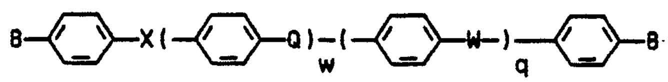 Ib

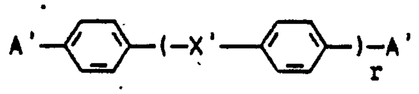 IIa

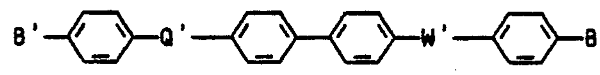 IIb

wobei X, X', Q, Q', W, W', p, q und r die in Anspruch 1 angegebene Bedeutung haben, w den Wert 0 oder 1 hat, A, A', B und B' -OH, Cl oder F sein können und das Verhältnis von OH zu Cl und/oder F-Endgruppen im Bereich von 0,8:1 bis 1,2:1 liegt,
Polythersulfonblöcke hergestellt werden und anschließend in einer zweiten Stufe Polyetherketonblöcke ankondensiert werden durch Umsetzung von Monomeren der allgemeinen Formeln IIIa und IIIb sowie ggf. IVa, und IVb

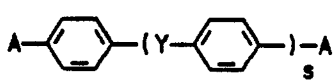 IIIA

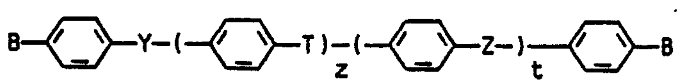 IIIb

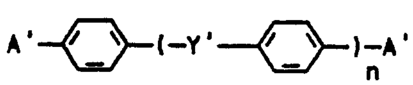 IVa

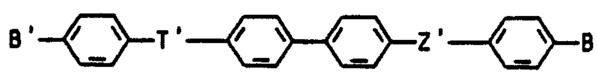 IVb

wobei Y, Y', T, T', Z und Z', s, t und u die in Anspruch 1 angegebene Bedeutung haben, z den Wert 0 oder 1 hat, A, A', B und B' -OH, Cl oder F sein können und das Verhältnis von OH zu Cl und/oder F-Endgruppen im Bereich von 0,8:1 bis 1,2:1 liegt, mit der Maßgabe, daß in mindestens einer der Stufen ein Monomeres mit einer Biphenyleinheit (IIb bzw. IVb) eingesetzt wird.

5. Verwendung der hochtemperaturbeständigen Blockcopolykondensate gemäß den Ansprüchen 1 bis 3 oder wie nach Anspruch 4 erhalten zur Herstellung von Formkörpern.

6. Formkörper, enthaltend als wesentliche Komponente hochtemperaturbeständige Blockcopolykondensate gemäß den Ansprüchen 1 bis 3 oder wie nach Anspruch 4 erhalten.